(19) Europäisches Patentamt
European Patent Office
Office européen des brevets

(11) **EP 2 944 661 B1**

(12) **EUROPEAN PATENT SPECIFICATION**

(45) Date of publication and mention
of the grant of the patent:
**18.09.2019 Bulletin 2019/38**

(51) Int Cl.:
***C08G 18/76*** *(2006.01)*          ***C08G 18/42*** *(2006.01)*
***C09J 175/06*** *(2006.01)*

(21) Application number: **14001739.3**

(22) Date of filing: **16.05.2014**

(54) **Thermoplastic polyurethane hot melt adhesive**

Thermoplastischer Polyurethan-Schmelzkleber

Adhésif thermofusible de polyuréthane thermoplastique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.11.2015 Bulletin 2015/47**

(73) Proprietor: **Henkel AG & Co. KGaA
40589 Düsseldorf (DE)**

(72) Inventors:
• **Slark, Andrew
  Wokingham, Berkshire SL25DS (GB)**
• **Bergeret, Aurélie
  25480 Pirey (FR)**

(56) References cited:
**US-A1- 2002 032 275    US-A1- 2002 120 088**

**EP 2 944 661 B1**

**Description**

The invention relates to hot melt adhesives composition based on thermally stable thermoplastic polyurethane copolymers (TPU) which are obtainable by reaction of at least one specific polyester polyol and at least one specific polyisocyanate. The TPU have a molar ratio of the NCO groups of the polyisocyanate to the OH groups of the polyester polyol of less than 0.95:1 and a viscosity of 1,000 to 100,000 mPas at 160°C. Furthermore, a method of applying a hot melt adhesive composition according to the present invention and specific uses thereof are concerned.

A key requirement for hot melt adhesives is their behaviour during melting, application and the adhesion after solidification. If the viscosity of the adhesive is too high, then the application process is difficult. If the temperature is increased, then the stability of the polymer is reduced during the application. Consequently the strength of the bond formed is reduced.

The most common polyurethane hot melt adhesives are reactive, contain isocyanate functional groups and are moisture cured. Cure takes place typically over at least several days. The materials produce versatile adhesion to a variety of substrates and bonds are resistant to high and low temperature and high humidity. However, these polyurethane hot melt adhesives need to be protected from moisture in expensive packaging until their application, and the application equipment necessary to process these adhesives is in addition expensive. Moreover, these reactive polyurethane hot melts contain 2 to 5% of free isocyanate monomers like 4,4'-diphenyl methane diisocyanate (MDI) which is a respiratory sensitizer and may cause health issues. The free monomers can be reduced to lower levels but this process is expensive. Curing of these adhesives is variable and can be slow depending on the moisture content in substrates, the atmospheric humidity, and the moisture vapour transmission rates of the formulations and the thickness of the glue line.

It is also known to prepare non-reactive polyurethanes. In such case the polymer shall not contain reactive NCO groups, i.e. should be essentially free of NCO groups, so the non-reactive polyurethanes can be stored without any problems. Such thermoplastic polyurethanes are used to manufacture moulded articles, such as footwear, cables, hoses, films or machine parts. Such articles of manufacture shall be used at ambient temperature, so they shall not provide properties of an adhesive.

Adhesives based on thermoplastic polyurethane copolymers are well known in the art. These thermoplastic polyurethane (TPU) hot melt adhesives comprise a polyester polyol or polyether polyol, which can be semi-crystalline, reacted with diisocyanates and frequently a chain extender. As diisocyanate usually MDI is used. The chain extender is typically a low number average molecular weight diol, e.g., 1,4-butane diol. In order to achieve good mechanical properties, the number average molecular weight of these TPU is high and in general more than 40,000 g/mol (Mn).

For example US 3,538,055 A discloses a thermoplastic polyurethane adhesive product of polyester components comprising 1,6-hexanediol and an aliphatic dicarboxylic compound, an aliphatic diol, and a diphenyl diisocyanate in a proportion to provide about 95 to about 105 percent of isocyanato groups for the total number of hydroxyl and carboxyl groups present in the composition.

US 2011/0245449 A discloses a film, injection molding or extruded article comprising a thermoplastic polyurethane which is obtained from a essentially symmetrical aliphatic diisocyanate A and at least one isocyanate-reactive compound B comprising hydroxyl groups and/or amino groups, as hot melt adhesive, wherein the number-average molecular weight ($M_n$) of compound B is at least 2200 g/mol, with the proviso that it is at least 950 g/mol if compound B is a sebacic ester, diisocyanate A and isocyanate-reactive compound B are reacted in the presence of a catalyst for the polyaddition reaction, the TPU comprises no chain extender, and the TPU has an index IN of less than 1000. Furthermore a specific method of melt adhesive bonding using this thermoplastic polyurethane is disclosed.

US 2002/120088 A discloses a thermally curable hot-melt adhesive composition, comprising

(A) a prepolymer having isocyanate groups, a number average molecular mass Mn of 700 to 6000 and wherein 50 to 100% of the reactive isocyanate groups of the prepolymer are blocked, said prepolymer being the reaction product of

(1) at least one straight-chain polyester which is at least semi-crystalline with
(2) at least one straight-chain polyester selected from the group consisting of amorphous polyesters and liquid polyesters,
(3) optionally at least one polyether, and
(4) at least one diisocyanate; and

(B) at least one reactive component selected from the group consisting of diamines, epoxide adducts of diamines, and polyalcohols.

Although the mechanical properties of these TPU materials are good, the materials are difficult to process. They require processing temperatures of higher more 160 °C, typically 180 to 220 °C and they have very high melt viscosity, typically more than 100,000 to 500,000 mPas in this high temperature range. In order to melt these materials, so that they are sufficiently soft to be able to flow for application, both high temperatures and high shear rates are required. Therefore, expensive extruders are used to process these TPU - both in the manufacture of these TPU and the use of these TPU. In addition, these polymers have low thermal stability, i.e., when they are kept at high processing temperatures for a longer time, the polymer chains degrade to a lower molecular weight resulting in a substantial reduction in both melt viscosity and mechanical properties. As a result of the very high viscosity, the high shear rates in manufacture and the poor thermal stability, these TPU cannot be used in standard application equipment for typical thermoplastic hot melt adhesives.

TPU materials with lower melt viscosity in the range 5,000 to 40,000 mPas at 140 °C are known for lamination of flexible foils. However, such materials are very soft, have relatively low cohesion, relatively low mechanical properties, low bond strengths and low heat resistance making them unsuitable for many applications.

Therefore, it is an object of the present invention to provide an improved hot melt adhesive based on TPU, which provides a low application viscosity in combination with an increased thermal stability of the molten TPU and high adhesion/cohesion. Furthermore, it is an object to provide a hot melt adhesive with increased thermal stability which is essentially free of isocyanate monomers. Moreover, a further object of the present invention is the provision of a hot melt adhesive based on TPU which does not require an extruder to apply the TPU as an adhesive.

The objects are solved by a hot melt adhesive comprising a thermoplastic polyurethane copolymer (TPU) which has an NCO:OH ratio of less than 0.95:1 and a viscosity of from 1,000 to 100,000 mPas at 160°C and is thermally stable. Moreover, as the thermal stability of the TPU is improved, the application process is surprisingly facilitated. In this regard, it has been surprisingly found that the adhesives of the present invention can be used in standard processing equipment without the need of high heat and shear. In particular, these materials can be used in standard processing equipment at low shear rates used to process other thermoplastic hot melt adhesives such as polyolefins, rubbers, EVA, acrylics. Furthermore, molten adhesive can be used over a longer period of time compared to common TPU adhesives of the prior art.

An adhesive according to the invention is a thermoplastic hot melt adhesive. It is meltable but it is essentially free of reactive functional groups which may crosslink after application. The adhesive shall consist of a thermoplastic polyurethane (TPU) and further additives which will be defined in detail below.

In the present specification the terms "a" and "an" and "at least one" are the same as the term "one or more" and can be employed interchangeably.

The term "essentially free" within the context of this invention is to be interpreted as the respective compound is contained in the composition in an amount of less than 5 wt.-%, 4 wt.-%, 3 wt.-%, 2 wt.-%, 1.5 wt.-%, 1 wt.-%, 0.75 wt.-%, 0.5 wt.-%, 0.25 wt.-%, or 0.1 wt.-%, based on the total weight of the composition, wherein the amounts are respectively more preferred in descending order. For example, 4 wt.-% is more preferred than 5 wt.-% and 3 wt.-% is more preferred than 4 wt.-%.

The abbreviation "TPU" is to be interpreted to mean "at least one TPU" unless explicitly stated otherwise.

In the present invention the molar ratio of the NCO groups of the polyisocyanate to the OH groups of the polyester polyol is also referred to as NCO:OH ratio.

In particular, the present invention relates to a hot melt adhesive composition comprising a thermoplastic polyurethane copolymer,

wherein the thermoplastic polyurethane copolymer comprises a reaction product of

at least one polyester polyol obtained by the condensation of one or more polyhydric alcohol with 2 to 30 carbon atoms with one or more polycarboxylic acid having 2 to 30 carbon atoms; and optionally a chain extender; and

at least one polyisocyanate which is selected from 4,4'-diphenylmethanediisocyanate, 2,2'-diphenylmethane diisocyanate, diphenyl methane 2,4'-diisocyanate, 1,3-phenylenediisocyanate, 1,4-phenylenediisocyanate, naphthalene-1,5-diisocyanate, toluene diisocyanate, tetramethyl xylylene diisocyanate, di- and tetraalkyl diphenylmethane diisocyanate, 4,4'-dibenzyl diisocyanate, dodecane diisocyanate, dimer fatty acid diisocyanate, 1,6-diisocyanato-2,2,4-trimethylhexane, butane-1,4-diisocyanate, hexane-1,6-diisocyanate, tetramethoxybutane-1,4-diisocyanate, dicyclohexylmethanediisocyanate, 1,12-diisocyanato-dodecane, 4,4-dicyclohexylmethanediisocyanate, 1,3-cyclohexane or 1,4-cyclohexene diisocyanate, 1-methyl-2,4-diisocyanato-cyclohexane, 1-isocyanatomethyl-3-isocyanato-1,5,5-trimethylcyclohexane, hydrogenated or partly hydrogenated MDI, xylylenediisocyanate, tetramethyl-xylylenediisocyanate, di- and tetraalkylenediphenylmethane-diisocyanate, and combinations thereof;

wherein the molar ratio of the NCO groups of the polyisocyanate to the OH groups of the polyester polyol is less than 0.95:1;

wherein the viscosity of the thermoplastic polyurethane copolymer is 1,000 to 100,000 mPas at 160°C;

wherein the thermoplastic polyurethane copolymer is thermally stable, and

wherein the thermal stability is defined as a viscosity change of less than ± 10 % compared to the initial viscosity of the thermoplastic polyurethane copolymer after 6 hours at 160 °C, wherein

the at least one polyester polyol comprises

a) at least one semi-crystalline polyester polyol having a melting point ($T_m$) of from 40 to 150 °C; and

b) at least one non-crystalline polyester polyol; and

whereby the melting point ($T_m$) and the viscosity are measured as described in the example section of the description.

Furthermore, the invention relates to a method of applying a hot melt adhesive composition according to the present invention to a substrate, comprising the steps

1) melting the hot melt adhesive composition in a heated container without agitation or shear;

2) pumping the melted hot melt adhesive composition of step 1) via a gear or piston through a heated hose; and

3) applying the hot melt adhesive composition via a nozzle, roller or spray head onto the substrate.

Moreover, the present invention also relates to the use of the hot melt adhesive composition according to the present invention in bookbinding, wood bonding, flat lamination, flexible packaging, profile wrapping, edge banding, textile lamination, low pressure molding, and shoes.

Further preferred embodiments of the invention are set out in the claims.

The TPU according to the present invention has an NCO:OH ratio of less than 0.95:1. In preferred embodiments the NCO:OH ratio is in a range having any combination of an upper limit selected from less than 0.95:1, 0.9:1, 0.85:1, 0.8:1, 0.75:1 or 0.7:1 and having a lower limit selected from 0.65:1, 0.7:1, 0.75:1, 0.8:1, 0.85:1, 0.9:1. In more preferred embodiments the NCO:OH ratio is in the range of 0.7:1 to 0.9:1. In most preferred embodiments the NCO:OH ratio is 0.75:1 to 0.85:1.

The TPU according to the present invention has a viscosity of 1,000 to 100,000 mPas at 160°C. In preferred embodiments, the viscosity is in a range having any combination of a lower limit selected from 1,000, 2,000, 3,000, 4,000, 5,000, 7,500, 10,000, 15,000, 20,000, 25,000, 30,000, 35,000, 40,000, 45,000, 50,000, and 70,000 mPas and an upper limit selected from 100,000, 90,000, 80,000, 70,000, 60,000, 50,000, 45,000, 40,000, 35,000, 30,000, 25,000, and 20,000 mPas. In more preferred embodiments the viscosity is between 2,000 and 70,000 mPas. In most preferred embodiments the viscosity is between 3,000 and 50,000 mPas.

The TPU according to the present invention is thermally stable. The thermal stability is defined to be a viscosity change of less than ± 10 % compared to the initial viscosity of the TPU after 6 hours at 160°C. The viscosity is measured as set out in the example section below.

Main components of the TPU according to the invention are polyester polyols. These shall include crystalline or semi-crystalline polyester polyols which are in the present invention referred to as semi-crystalline polyester polyols, and non-crystalline polyester polyols which include liquid polyester polyols and solid amorphous polyester polyols. Polyester polyols are well known to the skilled person and they can be obtained by a reaction of polycarboxylic acids and polyols. Thereby it is possible to include small amounts of three-functional alcohols or carboxylic acids in the reactions in order to incorporate branching without crosslinking. To obtain linear polyester polyols it is preferred that most of the monomers are difunctional components. The properties of the polyester polyols can be adjusted according to the type of comonomers. It is well known to the skilled person how to prepare semi-crystalline and non-crystalline polyester polyols. The polyester shall contain at least two hydroxyl groups. The properties of the polyester can be designed by the different components. For example, a single linear aliphatic diol and a linear aliphatic diacid will tend to provide semi-crystalline polymers. Increasing melting point can be obtained by increasing the length of the carbon chain in the diacid or by using symmetrical aromatic diacids. More amorphous materials can be obtained by increasing the number of comonomers or incorporating branched aliphatic comonomers. The polyester polyols can comprise further functional groups like NH or COOH which can also react with the one or more isocyanates. Suitable monomers for the preparation are described below.

The at least one polyester polyol of the present invention is obtained by the condensation of one or more polyhydric alcohol with 2 to 30 carbon atoms with one or more polycarboxylic acid having 2 to 30 carbon atoms; and optionally a chain extender.

The components of the TPU are selected in a way, so that preferably linear polyurethanes are obtained. In order to obtain a TPU which is essentially free of NCO groups, the amount of the NCO groups (equivalents) in the one or more isocyanate is selected to be smaller than the amount (equivalents) of reactive OH, NH, COOH groups of the polyester polyols.

The at least one polyester polyol which is comprised in the TPU according to the invention comprises

a) at least one semi-crystalline polyester polyol having a melting point ($T_m$) of from 40 to 150 °C, preferably 60 to 140 °C, more preferably 80 to 140°C (as determined by DSC as defined below), and

b) at least one non-crystalline polyester polyol.

The at least one semi-crystalline polyester polyol according to item a) has preferably a number average molecular

weight (M$_n$, measured by GPC as defined below) of more than 750 g/mol. In more preferred embodiments the M$_n$ is in a range having any combination of a lower limit selected from more than 750, 1,000, 2,000, 3,000, 4,000, 5,000, 6,000, 7,000, 8,000, 9,000 and 9,500 g/mol and an upper limit selected from 10,000, 9,000, 8,000, 7,000, 6,000, 5,000, 4,500, 4,000, 3,500, 3,000, 2,500, 2,000, and 1,000 g/mol. In even more preferred embodiments the range is 1,000 to 7,000 g/mol. In most preferred embodiments the range is 1,000 to 5,000 g/mol. The composition of this polyester polyol can be selected from the acid and diol monomers as listed below, which form a crystalline polyester. Preferably diol components are used including aliphatic diols, such as 1,4-butane diol and 1,6-hexane diol.

The hot melt adhesive composition contains in preferred embodiments the polyester polyol according to item a) from 5 to 50 wt.-%, based on the total weight of the TPU. In more preferred embodiments the polyester polyol according to item a) is contained from 10 to 40 wt.-% and in most preferred embodiments from 15 to 30 wt.-%.

The hot melt adhesive composition contains in preferred embodiments the polyester polyol according to item b) from 10 to 90 wt.-%, based on the total weight of the TPU. In more preferred embodiments the polyester polyol according to item b) is contained from 20 to 80 wt.-% and in most preferred embodiments from 30 to 60 wt.-%. These non-crystalline polyester polyols have preferably a glass transition temperature (T$_g$) from 50 to -70 °C, more preferably from 30 to - 60 °C, most preferably from 20 to -50 °C. The non-crystalline polyester polyols can preferably be liquid polyester polyols, which preferably have a viscosity of 500 to 50,000 mPas at room temperature (about 25°C).

The at least one non-crystalline polyester polyol according to item b) preferably comprises

c) a non-crystalline polyester polyol having a number average molecular weight (M$_n$) of less than 750 g/mol; and

d) a non-crystalline polyester polyol having a number average molecular weight (M$_n$) of at least 750 g/mol.

The at least one non-crystalline polyester polyol according to item c) has preferably a number average molecular weight (M$_n$, measured by GPC as defined below) of less than 750 g/mol. In more preferred embodiments the M$_n$ is in a range having any combination of a lower limit selected from 200, 300, 400, 500, 600, and 700 g/mol and an upper limit selected from 740, 700, 600, 500, 450, 400, 350, 300, and 250 g/mol. In more preferred embodiments the range is 700 to 250 g/mol. In most preferred embodiments the range is 600 to 300 g/mol. The composition of this polyester polyol can be selected from the acid and diol monomers as listed below, which form a non-crystalline polyester. Preferably employed diol components are ethylene glycol, diethylene glycol, propylene glycol and neopentyl glycol.

The at least one non-crystalline polyester polyol according to item d) has preferably a number average molecular weight (M$_n$, measured by GPC as defined below) of more than 750 g/mol. In more preferred embodiments the M$_n$ is in a range having any combination of a lower limit selected from 760, 1,000, 2,000, 3,000, 4,000, 5,000, 6,000, 7,000, 8,000, 9,000, 9,500 and 9,750 g/mol and an upper limit selected from 10,000, 9,000, 8,000, 7,000, 6,000, 5,000, 4,500, 4,000, 3,500, 3,000, 2,500, 2,000, and 1,000 g/mol. In more preferred embodiments the range is 1,000 to 7,000 g/mol.

In most preferred embodiments the range is 1,000 to 5,000 g/mol. The composition of this polyester polyol can be selected from the acid and diol monomers as listed below, which form a non-crystalline polyester. Preferably diol components are used including ethylene glycol, diethylene glycol, propylene glycol and neopentyl glycol.

The hot melt adhesive composition contains in preferred embodiments the polyester polyol according to item c) from 5 to 50 wt.-%, based on the total weight of the TPU. In more preferred embodiments the polyester polyol according to item c) is contained from 10 to 40 wt.-% and in most preferred embodiments from 15 to 30 wt.-%.

The hot melt adhesive composition contains in preferred embodiments the polyester polyol according to item d) from 10 to 60 wt.-%, based on the total weight of the TPU. In more preferred embodiments the polyester polyol according to item d) is contained from 20 to 50 wt.-% and in most preferred embodiments from 25 to 50 wt.-%.

In more preferred embodiments the hot melt adhesive composition according to the invention comprises 10 to 30 wt.-% of compound a); 10 to 35 wt.-% of compound c); 10 to 35 wt.-% of compound d); and 10 to 25 wt.-% of the at least one polyisocyanate, based on the total weight of the TPU.

Polyester polyols according to the present invention are formed through the condensation of one or more polyhydric alcohols having from 2 to 30 carbon atoms with one or more polycarboxylic acids having from 2 to 30, preferably from 2 to 14, carbon atoms. Suitable polyols include alkylene diols, in particular linear alcohols with 2 to 30 C atoms, which exhibit up to four preferably two OH groups; glycol ethers; and alicyclic polyols. Examples of suitable polyhydric alcohols include ethylene glycol, propylene glycol such as 1,2-propylene glycol and 1,3-propylene glycol, glycerol, pentaerythritol, trimethylolpropane, butanediol, pentanediol, hexanediol, dodecanediol, octanediol, chloropentanediol, glycerol monoallyl ether, glycerol monoethyl ether, diethylene glycol, 2-ethylhexanediol, 1,4-cyclohexanediol, 1,2,6-hexanetriol, 1,3,5-hexanetriol, 1,3-bis-(2-hydroxyethoxy)propane and the like. The polyols can be used separately or in mixture. They preferably have a molecular weight from 100 to 750 g/mol, their functionality is preferably 2 or 3.

Examples of polycarboxylic acids include ortho-phthalic acid, iso-phthalic acid, terephthalic acid, tetrachlorophthalic acid, maleic acid, dodecylmaleic acid, octadecenylmaleic acid, fumaric acid, aconitic acid, trimellitic acid, tricarballylic acid, 3,3'-thiodipropionic acid, succinic acid, adipic acid, suberic acid, azelaic acid, malonic acid, glutaric acid, pimelic acid, sebacic acid, cyclohexane-1,2-dicarboxylic acid, 1,4-cyclohexadiene-1,2-dicarboxylic acid, 3-methyl-3,5-cyclohexadiene-1,2-dicarboxylic acid and the corresponding acid anhydrides, acid chlorides and acid esters such as phthalic anhydride, phthaloyl chloride and the dimethyl ester of phthalic acid. Dimer fatty acids can also be used, where they are the dimerization product of mono- or polyunsaturated acids and/or esters thereof. Preferred dimer fatty acids are dimers of C10 to C30, more preferably C14 to C22 carbon acids. Suitable dimer fatty acids include the dimerization products of oleic acid, linoleic acid, linolenic acid, palmitoleic acid and elaidic acid. The dimerization products of the unsaturated fatty acid mixtures obtained in the hydrolysis of natural fats and oils, e.g., sunflower oil, soybean oil, olive oil, rapeseed oil, cottonseed oil and tall oil may also be used. In addition to the dimer fatty acids, dimerization usually results in varying amounts of oligomeric fatty acids and residues of monomeric fatty acids. Suitable dimer fatty acids have a dimer acid content greater than 75 wt.% based on the total weight of the dimer fatty acid starting material.

Further suitable polyester polyols are polycarbonate polyols. Polycarbonate polyols can be received for example by the reaction from diols, like propylene glycol, butanediol-1,4 or hexenediol-1,6, diethyleneglycol, triethyleneglycol or mixtures from two or more from it with diarylcarbonates. Polyesters on the basis of $\varepsilon$- caprolactone are also suitable. Also polyester polyols are suitable, which contain one or more urethane groups in the polymer chain.

Other useful polyester polyols include, e.g., polyols derived from oleochemicals, and the complete ring opening of epoxidized triglycerides of an at least partially olefinic unsaturated fatty acid-containing fat mixture and at least one alcohol containing from 1 carbon atom to 12 carbon atoms, followed by partial transesterification of the triglyceride derivatives to form alkyl ester polyols having from 1 carbon atom to 12 carbon atoms in the alkyl chain.

Commercially available polyester polyols which may be used in the practice of the invention include semi-crystalline or non-crystalline polyesters. For this invention it shall be understood, that the term polyester polyol shall include also polyester, which comprise at the end of the polymer chain amino groups or carboxylic groups. But the preferred group of such polyester are polyester diols.

Preferred polycarboxylic acids are the aliphatic and cycloaliphatic dicarboxylic acids containing no more than 14 carbon atoms and the aromatic dicarboxylic acids containing no more than 14 atoms. In more preferred embodiments the at least one polyester polyol comprises an ortho-phthalate. It should be understood that "comprising ortho-phthalate" in this context is to be interpreted that the term "ortho-phthalate" also includes derivatives thereof, i.e. the polyester polyol is obtained by reacting a mixture including, at least one of ortho-phthalate, phthalic anhydride, or derivatives thereof or combinations thereof. In even more preferred embodiments, the ortho-phthalate is comprised in the polyester polyol according to item b). In most preferred embodiments the ortho-phthalate is comprised in the polyester polyol according to item c).

The at least one polyisocyanate is selected from 4,4'-diphenylmethanediisocyanate (MDI), 2,2'-diphenylmethane diisocyanate, diphenyl methane 2,4'-diisocyanate, 1,3-phenylenediisocyanate, 1,4-phenylenediisocyanate, naphthalene-1,5-diisocyanate (NDI), toluene diisocyanate (TDI), tetramethyl xylylene diisocyanate, di- and tetraalkyl diphenylmethane diisocyanate, 4,4'-dibenzyl diisocyanate, dodecane diisocyanate, dimer fatty acid diisocyanate, 1,6-diisocyanato-2,2,4-trimethylhexane, butane-1,4-diisocyanate, hexane-1,6-diisocyanate, tetramethoxybutane-1,4-diisocyanate, dicyclohexylmethanediisocyanate, 1,12-diisocyanato-dodecane, 4,4-dicyclohexylmethanediisocyanate, 1,3-cyclohexane or 1,4-cyclohexene diisocyanate, 1-methyl-2,4-diisocyanato-cyclohexane, 1-isocyanatomethyl-3-isocyanato-1,5,5-trimethylcyclohexane (isophorone diisocyanate, IPDI), hydrogenated or partly hydrogenated MDI ([H]12MDI (hydrogenated) or [H]6MDI (partly hydrogenated)), xylylenediisocyanate (XDI), tetramethyl-xylylenediisocyanate (TMXDI), di- and tetraalkylenediphenylmethane-diisocyanate, and combinations thereof.

Mixtures of aliphatic or aromatic isocyanates can be used. More preferably aromatic diisocyanates are used.

The hot melt adhesive composition contains in preferred embodiments the isocyanate from 5 to 40 wt.-%, based on the total weight of the TPU. In more preferred embodiments isocyanate is contained from 10 to 30 wt.-% and in most preferred embodiments from 10 to 25 wt.-%.

The TPU according to the present invention can optionally comprise a chain extender. A chain extender according to the invention is a short chain organic molecule with a specific, single defined molecular weight, having a molecular weight of less than 250 g/mol and are well known to the skilled person. Exemplarily compounds are for example disclosed in Appendix 1 page 448 of "The Polyurethanes Handbook", editors David Randall and Steve Lee, John Wiley and Sons 2002. Exemplarily compounds are alkane diols, e.g. 1,4-butane diol, 1,6-hexane diol, 1,12-dodecane diol or similar diols, which can be substituted with alkyl, cycloalkyl, phenyl or ether groups. These chain extenders are not oligomeric or polymeric. In a further preferred embodiment, the TPU is essentially free of chain extender.

The TPU can further comprise a polyether polyol such as poly(ethylene glycol), poly(propylene glycol) or poly(tetramethylene glycol). Polyether polyols are known to the skilled person and exemplarily compounds are disclosed for example in "The Polyurethanes Handbook", Chapter 6, editors David Randall and Steve Lee, John Wiley and Sons 2002.

In a further preferred embodiment, the TPU is essentially free of polyetherpolyol. Moreover, in a preferred embodiment, the TPU is essentially free of polyetherpolyol and chain extender.

The manufacture of the TPU is well known in the art can be performed in any reaction vessel which can be heated. In a typical process the polyol components are mixed together as a melt with the resulting composition is optionally dried and a vacuum is optionally applied until the moisture content is below 250 ppm. Subsequently the isocyanates are added to the polyol mixture and this mixture is reacted. The man skilled in the art knows, how to determine the temperature and time to complete the reaction. The TPU can be made in solvents but this is not preferred because the solvent needs to be removed before using the TPU as a hot melt.

The TPU has preferably a molecular weight ($M_n$) of 5,000 to 40,000 g/mol, more preferably 10,000 to 30,000 g/mol.

The hot melt adhesive according to the invention shall contain at least one TPU as disclosed above. An adhesive composition according to the invention preferably comprises of 50 to 99.9 wt-% of a TPU according to the invention. More preferably the composition comprises 60 to 95 wt.-% of a TPU, most preferably 75 to 90 wt.-%.

It may contain other additives which are known in the art. The term "additive" includes dyes, fillers (e.g., silicates, talcum, calcium carbonates, clays or carbon black), thixotropic agents (e.g., bentones, pyrogenic silicic acids, urea derivatives, fibrillated or pulp short fibers), color pastes and/or pigments, conductivity additives (e.g., conductivity carbon blacks or lithium perchlorate), plasticizers, tackifiers, other thermoplastic polymers, which are different from the TPU according to the invention, stabilizers, adhesion promoters, rheological additives, waxes and any combination thereof.

The hot melt adhesive composition according to the present invention preferably comprises 0.1 to 50 wt.-% of additives, based on the total weight of the composition. In more preferred embodiments 5 to 40 wt.-%, most preferably 10 to 25 wt.-% are contained.

The hot-melt adhesive compositions according to the invention may contain tackifiers, such as, e.g., resins derived from abietic acid, abietic acid esters, other rosin esters, polyterpene resins, terpene/phenolic resins, styrenated terpenes, poly-alpha-methylstyrene, alpha-methylstyrene-phenolic or aliphatic, aromatic or aromatic/ aliphatic hydrocarbon resins or coumarone/indene resins or resins derived from low molecular weight polyamides. These tackifying resins may optionally contain OH groups, to improve compatibility of the different components.

The hot melt adhesive composition according to the present invention preferably comprises 0.1 to 50 wt.-% of at least one tackifier, based on the total weight of the composition. In more preferred embodiments 5 to 40 wt.-%, most preferably 10 to 25 wt.-%, are contained.

The hot-melt adhesive compositions according to the invention may contain other thermoplastic polymers, which are different from the TPU according to the present invention. These include but are not limited to EVA, rubber type polymers, styrene copolymers, polyester copolymers, polycarbonates, polyamides, acrylics and thermoplastic polyurethanes.

The hot melt adhesive composition according to the present invention preferably comprises 0.1 to 50 wt.-% of at least one other thermoplastic polymer, which is different from the TPU according to the present invention, based on the total weight of the composition. In more preferred embodiments 5 to 40 wt.-%, most preferably 10 to 25 wt.-%, are contained.

The hot melt adhesive composition according to the present invention preferably comprises 0.1 to 50 wt.-% of at least one filler, based on the total weight of the composition. In more preferred embodiments 5 to 40 wt.-%, most preferably 10 to 25 wt.-%, are contained.

The hot-melt adhesive compositions according to the invention may contain plasticizers, provided that these plasticizers do not interfere with the hot melt capability of the adhesive - such as phthalates, benzoates, sucrose esters and sulphonamides. By way of example there may be mentioned the liquid phthalate plasticizers, plasticizers based on aromatic esters, such as, e.g., esters of benzoic acid, or also solid plasticizers such as dicyclohexyl phthalate, cyclohexane dimethanol dibenzoate and the like. Also suitable are other plasticizers such as sucroseacetate isobutyrate, ortho-/para-toluene sulphonamide or N-ethyl-ortho-toluene sulphonamide.

The hot melt adhesive composition according to the present invention preferably comprises 0.1 to 50 wt.-% of plasticizers, based on the total weight of the composition. In more preferred embodiments 5 to 40 wt.-%, most preferably 10 to 25 wt.-% are contained.

As stabilizers different components can be used such as antioxidants, UV stabilizers, hydrolysis stabilizers. Examples for these components are sterically hindered phenols of high molecular weight, sulphur-containing and phosphorus-containing phenols or amines. This include sterically hindered phenols, polyfunctional phenols, thioether, substituted benzotriazoles, hindered benzophenone and/or sterically hindered amines. Examples of hydrolysis stabilizers include oligomeric and/or polymeric aliphatic or aromatic carbodiimides. Such components are commercially available and known to the skilled person.

The hot melt adhesive composition according to the present invention preferably comprises 0.1 to 10 wt.-% of stabilizer, based on the total weight of the composition. In more preferred embodiments 0.2 to 5 wt.-%, most preferably 0.5 to 3 wt.-% are contained.

As adhesion promoters, preferably organofunctional silanes can be used, either in monomeric, oligomeric or polymeric form. The hot melt adhesive composition according to the present invention preferably comprises 0.1 to 10 wt.-% of adhesion promoter, based on the total weight of the composition. In more preferred embodiments 0.2 to 5 wt.-%, most preferably 0.5 to 3 wt.-% are contained.

The manufacture of the adhesive composition can be performed as known in the art. The TPU according to the invention is manufactured and thereafter it is blended with the different components and additives. This can be done in any known device, e.g., batch reactor, extruder, mixer, kneader or similar machines. It is also possible for some ingredients to be added to the polyester polyol before reaction with the isocyanate, provided that functional materials on the additives do not interfere with the reaction between polyol and isocyanate.

The adhesive according to the invention is a thermoplastic non-reactive hot melt. The composition is made with an excess of polyol components, the TPU is essentially free of unreacted and monomeric isocyanates. So the risk of using hazardous adhesives is reduced. Upon cooling the adhesive layer will form the cohesive and adhesive forces. As no chemical crosslinking is required to develop the full adhesive bond, this improves the ease of processing of products bonded with such hot melt adhesive.

The hot melt adhesive composition according to the present invention can be applied to a substrate in any know method for common TPU.

Additionally, the hot melt adhesive composition according to the present invention can be applied to a substrate with a method comprising the steps

1) melting the hot melt adhesive composition in a heated container without agitation or shear;
2) pumping the melted hot melt adhesive composition of step 1) via a gear or piston pump through a heated hose; and
3) applying the hot melt adhesive composition via a nozzle, roller or spray head onto the substrate.

The melting temperature in step 1) is preferably below 160°C, more preferably below 150°C.

The adhesive of the present invention can be used in all areas in which common hot melt adhesives are applied. Due to its properties the adhesive of the present invention is particularly useful in the bookbinding industry, wood bonding, flat lamination, flexible packaging, profile wrapping, edge banding, textile lamination, low pressure molding, and shoes.

Example section

The following measurement methods are employed in the present invention.

Preparation of TPU

Polyester polyols and Irganox 1010 were weighed into a glass flask and heated to 120°C with mechanical stirring. The flask was sealed and vacuum was applied for 1 hour (pressure 2-5 mbar) via a vacuum pump to remove water. Flake MDI was added and allowed to react with the hydroxyl groups at 130°C. The reaction was followed by infrared spectroscopy until the NCO absorption at 2200 cm$^{-1}$ disappeared.

Melting point and Tg

This was determined using a micro-balance capable of measuring to $\pm0.01$ mg and a Mettler Toledo TA Instruments Q100/Q1000 DSC unit. The DSC was calibrated using an Indium standard. 10 to 15 mg of sample was weighed into an aluminum DSC pan and the lid fixed securely. The temperature of the DSC chamber was set at 40°C prior to use. The sample pan and reference pan (blank) were placed into the DSC cell chamber. The temperature was reduced to -50°C at a cooling rate of 15°C per minute. The temperature was held at -50°C and then increased to 150°C at a heating rate of 5°C per minute. The Tg was obtained from an inflection in the heat flow whereas Tm was obtained from a peak in the heat flow.

Molecular weight determination

The respective compounds/compositions were analysed for molecular weight and molar mass distribution by Gel Permeation Chromatography (GPC) under the same chromatographic condition. Test samples were dissolved in N,N-dimethylacetamide and each of the prepared sample solutions was filtered through a 0.20 $\mu$m syringe filter into analysis vial. The prepared sample solutions were analysed by liquid chromatography using a GPC separation technique using Styragel columns with N,N-dimethylacetamide/LiCl elution and refractive index detection at 80 °C. The number average molecular weight ($M_n$) and weight average molecular weight (Mw) that were determined for the tested substances are based on an external calibration that was carried out with polystyrene standards.

Melt viscosity

Melt viscosity was measured using a Brookfield Viscometer model RVDV-1+ with a Model 106 temperature controller and Thermosel unit, calibrated with viscosity standard oil. 10 to 12 g of adhesive was weighed into a disposable aluminum viscometer tube. The tube was inserted into the Viscometer and left to equilibrate for 30 minutes at 160 °C. The preheated spindle no. 27 was inserted into the adhesive and allowed to rotate for 30 minutes at 160 °C; the speed of rotation was changed according to the viscosity range measured. The initial viscosity V1 at 160°C was then measured.

Thermal stability

The sample was kept in the viscometer at a constant temperature of 160 °C ($\pm$ 1°C) for 6 hours. Then the viscosity V2 at 160°C was measured and the change in viscosity over the 6 hour period was calculated as:

$$\% \text{ change} = [(V2-V1]) / V1] \times 100$$

Open time

The adhesive was preheated to 160 °C and a 150 $\mu$m thick film was applied to MDF (Medium Density Fibreboard) using a pre-heated metal coating block. The time was set at t=0. At intervals of 5 to 10 seconds, a paper strip was applied to the adhesive with finger pressure on the surface of the paper in contact with the adhesive. After a few minutes, the paper was removed. The open time limit occurs when there is no paper tear resulting from a lack of adequate wetting of the paper by the adhesive.

Adhesion

The TPU was heated for 30 minutes in an oven at 160 °C and a film was made with a metal coating block (25 mm wide, x 0.25 mm thick). The films were then conditioned at room temperature for three days. After three days, an adhesive strip (10 cm in long) was placed between two paper strips of the same dimensions. A wooden board was preheated at 180°C for 2 minutes and the samples were placed on the board in the oven at 180°C for 1 minute. The board and samples were then removed from the oven and a 2kg roller was applied on the sample. The samples were left for three days at room temperature and the two pieces of paper were peeled apart to expose the adhesive strip. 100% of adhesion is obtained if the adhesive strip is entirely covered by remaining paper (average of 3 measurements). The paper stock was 130gsm cross-grain, coated and printed.

Semi-crystalline polyester A1, copolymer of hexane diol and adipic acid, $M_n$ = 4065 g per mole, Tm = 55 °C

Semi-crystalline polyester A2, copolymer of diethylene glycol and tetradecanoic acid, $M_n$ = 3740 g per mole, Tm = 90 °C

Semi-crystalline polyester A3, copolymer of hexane diol, adipic acid and terephthalic acid, $M_n$ = 3815 g per mole, Tm = 110 °C

Non-crystalline polyester B1, copolymer of diethylene glycol, adipic acid and isophthalic acid $M_n$ = 1910 g per mole, Tg = -25 °C

Non-crystalline polyester B2, copolymer of ethylene glycol, neopentyl glycol, sebacic acid and isophthalic acid, $M_n$ = 1875 g per mole, Tg = -25 °C

Non-crystalline Polyester B3, copolymer of diethylene glycol and phthalic anhydride, $M_n$ = 568 g per mole

1,4-butanediol

1,12-dodecanediol

4,4' MDI

Irganox® 1010 (antioxidant)

In the examples % relates to wt.-% based on the total composition.

TPU 1 (inventive)  NCO/OH = 0.83
A1                  24.9%
B1                  29.6%
B3                  29.6%
MDI                 15.4%
Irganox 1010        0.5%

TPU 2 (inventive)  NCO/OH = 0.91
B1                  48.9%
B3                  32.0%
MDI                 18.6%
Irganox 1010        0.5%

TPU 3 (inventive)  NCO/OH = 0.83
A2                  25.0
B1                  9.9%
B2                  19.8%
B3                  29.7%
MDI                 15.1%
Irganox 1010        0.5%

TPU 4 (inventive)  NCO/OH = 0.83
A3                  25.0
B1                  9.9%
B2                  19.8%
B3                  29.7%
MDI                 15.1%
Irganox 1010        0.5%

TPU 5 (inventive)  NCO/OH = 0.87
A1                  24.9%
B1                  29.5%
B3                  29.5%
MDI                 15.6%
Irganox 1010        0.5%

TPU C1 (comparative), Pearlbond® D12C75, Lubrizol
TPU C2 (comparative), Sheenthane® AH-780L, Taiwan Sheen Soon

| Material | Melt viscosity (mPas) | Viscosity change (+/- %) |
|---|---|---|
| TPU 1 | 24,275 | -2.2 |
| TPU 2 | 74,500 | -1.5 |
| TPU 3 | 17,500 | -2.9 |
| TPU 4 | 20,550 | -1.8 |
| TPU 5 | 13,835 | -6.8 |

(continued)

| Material | Melt viscosity (mPas) | Viscosity change (+/- %) |
|---------|----------------------|--------------------------|
| TPU C1 | 281,000 | -84 |
| TPU C2 | 102,000 | -74 |

| Material | Open time (s) | Adhesion (%) |
|---------|---------------|--------------|
| TPU 5 | 90 | 100 |
| TPU C2 | 10 | 35 |

**Claims**

1. A hot melt adhesive composition comprising a thermoplastic polyurethane copolymer,
   wherein the thermoplastic polyurethane copolymer comprises a reaction product of at least one polyester polyol obtained by the condensation of one or more polyhydric alcohol with 2 to 30 carbon atoms with one or more polycarboxylic acid having 2 to 30 carbon atoms; and optionally a chain extender; and
   at least one polyisocyanate which is selected from 4,4'-diphenylmethanediisocyanate, 2,2'-diphenylmethane diisocyanate, diphenyl methane 2,4'-diisocyanate, 1,3-phenylenediisocyanate, 1,4-phenylenediisocyanate, naphthalene-1,5-diisocyanate, toluene diisocyanate, tetramethyl xylylene diisocyanate, di- and tetraalkyl diphenylmethane diisocyanate, 4,4'-dibenzyl diisocyanate, dodecane diisocyanate, dimer fatty acid diisocyanate, 1,6-diisocyanato-2,2,4-trimethylhexane, butane-1,4-diisocyanate, hexane-1,6-diisocyanate, tetramethoxybutane-1,4-diisocyanate, dicyclohexylmethanediisocyanate, 1,12-diisocyanato-dodecane, 4,4-dicyclohexylmethanediisocyanate, 1,3-cyclohexane or 1,4-cyclohexene diisocyanate, 1-methyl-2,4-diisocyanato-cyclohexane, 1-isocyanatomethyl-3-isocyanato-1,5,5-trimethylcyclohexane, hydrogenated or partly hydrogenated MDI, xylylenediisocyanate, tetramethyl-xylylenediisocyanate, di- and tetraalkylenediphenylmethane-diisocyanate, and combinations thereof;
   wherein the molar ratio of the NCO groups of the polyisocyanate to the OH groups of the polyester polyol is less than 0.95:1;
   wherein the viscosity of the thermoplastic polyurethane copolymer is 1,000 to 100,000 mPas at 160°C;
   wherein the thermoplastic polyurethane copolymer is thermally stable; and
   wherein the thermal stability is defined as a viscosity change of less than $\pm$ 10 % compared to the initial viscosity of the thermoplastic polyurethane copolymer after 6 hours at 160 °C, wherein the at least one polyester polyol comprises

   a) at least one semi-crystalline polyester polyol having a melting point ($T_m$) of from 40 to 150 °C; and
   b) at least one non-crystalline polyester polyol, and

   whereby the melting point ($T_m$) and the viscosity are measured as described in the example section of the description.

2. The hot melt adhesive composition according to claim 1, wherein
   the at least one non-crystalline polyester polyol b) comprises

   c) a non-crystalline polyester polyol having a number average molecular weight ($M_n$) of less than 750 g/mol; and
   d) a non-crystalline polyester polyol having a number average molecular weight ($M_n$) of at least 750 g/mol.

3. The hot melt adhesive composition according to claim 1 or 2, wherein the at least one polyester polyol comprises an ortho-phthalate.

4. The hot melt adhesive composition according to any one of claims 1 to 3, wherein the thermoplastic polyurethane copolymer has a number average molecular weight ($M_n$) of from 5,000 to 40,000 g/mol.

5. The hot melt adhesive composition according to any of claims 1 to 4, wherein the composition contains compound a) from 5 to 50 wt.-%, based on the total weight of the thermoplastic polyurethane copolymer.

6. The hot melt adhesive composition according to any of claims 2 to 5, wherein the composition contains compound c) from 5 to 50 wt.-%, based on the total weight of the thermoplastic polyurethane copolymer.

7. The hot melt adhesive composition according to any of claims 2 to 6, wherein the composition contains compound d) from 10 to 60 wt.-%, based on the total weight of the thermoplastic polyurethane copolymer.

8. The hot melt adhesive composition according to any one of claims 2 to 4, wherein thermoplastic polyurethane copolymer comprises
10 to 30 wt.-% of compound a);
10 to 40 wt.-% of compound c);
10 to 40 wt.-% of compound d); and
10 to 25 wt.-% of the at least one polyisocyanate, based on the total weight of the thermoplastic copolymer.

9. The hot melt adhesive composition according to any one of claims 1 to 8, wherein the hot melt adhesive composition comprises 50 to 99.9 wt.-% of the thermoplastic polyurethane copolymer, based on the total weight of the composition.

10. The hot melt adhesive composition according to any one of claims 1 to 9, wherein the hot melt adhesive composition comprises 0.1 to 50 wt.-% of additives, based on the total weight of the composition.

11. The hot melt adhesive composition according to any one of claims 1 to 10, wherein the hot melt adhesive composition comprises 0.1 to 50 wt.-%, based on the total weight of the composition, of at least one compound selected from tackifiers, fillers, plasticizers and further thermoplastic polymers, which are different form the thermoplastic polyurethane copolymer, or a combination thereof.

12. The hot melt adhesive composition according to any one of claims 1 to 11, wherein the hot melt adhesive composition comprises 0.1 to 10 wt.-% of at least one compound selected from stabilizers and adhesion promoters or a combination thereof, based on the total weight of the composition.

13. A method of applying a hot melt adhesive composition according to any one of claims 1 to 12 to a substrate, comprising the steps of

1) melting the hot melt adhesive composition in a heated container without agitation or shear;
2) pumping the melted hot melt adhesive composition of step 1) via a gear or piston pump through a heated hose; and
3) applying the hot melt adhesive composition via a nozzle, roller or spray head onto the substrate.

14. Use of the hot melt adhesive composition according to any one of claims 1 to 12 in bookbinding, wood bonding, flat lamination, flexible packaging, profile wrapping, edge banding, textile lamination, low pressure molding, and shoes.

**Patentansprüche**

1. Heißschmelzklebstoffzusammensetzung, umfassend: ein thermoplastisches Polyurethan-Copolymer, wobei das thermoplastische Polyurethan-Copolymer ein Umsetzungsprodukt aus mindestens einem Polyesterpolyol, das durch die Kondensation eines oder mehrerer mehrwertiger Alkohole mit 2 bis 30 Kohlenstoffatomen mit einer oder mehreren Polycarbonsäuren, die 2 bis 30 Kohlenstoffatome aufweisen, erhalten wird; und

optional einen Kettenverlängerer umfasst; und
mindestens ein Polyisocyanat, das aus 4,4'-Diphenylmethandiisocyanat, 2,2'-Diphenylmethandiisocyanat, Diphenylmethan-2,4'-diisocyanat, 1,3-Phenylendiisocyanat, 1,4-Phenylendiisocyanat, Naphthalin-1,5-diisocyanat, Toluoldiisocyanat, Tetramethylxylylendiisocyanat, Di- und Tetraalkyldiphenylmethandiisocyanat, 4,4'-Dibenzyldiisocyanat, Dodecandiisocyanat, Dimerfettsäurediisocyanat, 1,6-Diisocyanato-2,2,4-trimethylhexan, Butan-1,4-diisocyanat, Hexan-1,6-diisocyanat, Tetramethoxybutan-1,4-diisocyanat, Dicyclohexylmethandiisocyanat, 1,12-Diisocyanatododecan, 4,4-Dicyclohexylmethandiisocyanat, 1,3-Cyclohexan oder 1,4-Cyclohexendiisocyanat, 1-Methyl-2,4-diisocyanatocyclohexan, 1-Isocyanatomethyl-3-isocyanato-1,5,5-trimethylcyclohexan, hydriertem oder teilweise hydriertem MDI, Xylylendiisocyanat, Tetramethylxylylendiisocyanat, Di- und Tetraalkylendiphenylmethandiisocyanat und Kombinationen davon ausgewählt ist;
wobei das Molverhältnis der NCO-Gruppen des Polyisocyanats zu den OH-Gruppen des Polyesterpolyols weniger als 0,95:1 beträgt;
wobei die Viskosität des thermoplastischen Polyurethan-Copolymers bei 160 °C 1.000 bis 100.000 mPas beträgt;
wobei das thermoplastische Polyurethan-Copolymer thermisch stabil ist; und
wobei die thermische Stabilität als eine Viskositätsänderung von weniger als $\pm$ 10 % im Vergleich zu der Ausgangsviskosität des thermoplastischen Polyurethan-Copolymers nach 6 Stunden bei 160 °C definiert ist, wobei das mindestens eine Polyesterpolyol umfasst:

a) mindestens ein teilkristallines Polyesterpolyol mit einem Schmelzpunkt ($T_m$) von 40 bis 150 °C; und
b) mindestens ein nicht kristallines Polyesterpolyol, und wodurch der Schmelzpunkt ($T_m$) und die Viskosität wie in dem Beispielabschnitt der Beschreibung beschrieben gemessen werden.

2. Heißschmelzklebstoffzusammensetzung nach Anspruch 1, wobei das mindestens eine nicht kristalline Polyesterpolyol b) umfasst:

c) ein nicht kristallines Polyesterpolyol mit einem zahlenmittleren Molekulargewicht ($M_n$) von weniger als 750 g/mol; und
d) ein nicht kristallines Polyesterpolyol mit einem zahlenmittleren Molekulargewicht ($M_n$) von mindestens 750 g/mol.

3. Heißschmelzklebstoffzusammensetzung nach Anspruch 1 oder 2, wobei das mindestens eine Polyesterpolyol ein Orthophthalat umfasst.

4. Heißschmelzklebstoffzusammensetzung nach einem der Ansprüche 1 bis 3, wobei das thermoplastische Polyurethan-Copolymer ein zahlenmittleres Molekulargewicht ($M_n$) von 5.000 bis 40.000 g/mol aufweist.

5. Heißschmelzklebstoffzusammensetzung nach einem der Ansprüche 1 bis 4, wobei die Zusammensetzung Verbindung a) von 5 bis 50 Gew.-% bezogen auf das Gesamtgewicht des thermoplastischen Polyurethan-Copolymers enthält.

6. Heißschmelzklebstoffzusammensetzung nach einem der Ansprüche 2 bis 5, wobei die Zusammensetzung Verbindung c) von 5 bis 50 Gew.-% bezogen auf das Gesamtgewicht des thermoplastischen Polyurethan-Copolymers enthält.

7. Heißschmelzklebstoffzusammensetzung nach einem der Ansprüche 2 bis 6, wobei die Zusammensetzung Verbindung d) von 10 bis 60 Gew.-% bezogen auf das Gesamtgewicht des thermoplastischen Polyurethan-Copolymers enthält.

8. Heißschmelzklebstoffzusammensetzung nach einem der Ansprüche 2 bis 4, wobei das thermoplastische Polyurethan-Copolymer umfasst:

10 bis 30 Gew.-% von Verbindung a);
10 bis 40 Gew.-% von Verbindung c);
10 bis 40 Gew.-% von Verbindung d); und
10 bis 25 Gew.-% des mindestens einen Polyisocyanats bezogen auf das Gesamtgewicht des thermoplastischen Copolymers.

9. Heißschmelzklebstoffzusammensetzung nach einem der Ansprüche 1 bis 8, wobei die Heißschmelzklebstoffzusammensetzung 50 bis 99,9 Gew.-% des thermoplastischen Polyurethan-Copolymers bezogen auf das Gesamtgewicht der Zusammensetzung umfasst.

10. Heißschmelzklebstoffzusammensetzung nach einem der Ansprüche 1 bis 9, wobei die Heißschmelzklebstoffzusammensetzung 0,1 bis 50 Gew.-% Zusätze bezogen auf das Gesamtgewicht der Zusammensetzung umfasst.

11. Heißschmelzklebstoffzusammensetzung nach einem der Ansprüche 1 bis 10, wobei die Heißschmelzklebstoffzusammensetzung 0,1 bis 50 Gew.-%, bezogen auf das Gesamtgewicht der Zusammensetzung, von mindestens einer Verbindung umfasst, die aus Klebrigmachern, Füllstoffen, Weichmachern und weiteren thermoplastischen Polymeren, die sich von dem thermoplastischen Polyurethan-Copolymer unterscheiden, oder einer Kombination davon ausgewählt ist.

**12.** Heißschmelzklebstoffzusammensetzung nach einem der Ansprüche 1 bis 11, wobei die Heißschmelzklebstoffzusammensetzung 0,1 bis 10 Gew.-%, bezogen auf das Gesamtgewicht der Zusammensetzung, von mindestens einer Verbindung umfasst, die aus Stabilisatoren und Haftvermittlern oder einer Kombination davon ausgewählt ist.

**13.** Verfahren zum Auftragen einer Heißschmelzklebstoffzusammensetzung nach einem der Ansprüche 1 bis 12 auf ein Substrat, das die Schritte umfasst:

1) Schmelzen der Heißschmelzklebstoffzusammensetzung in einem erhitzten Behälter ohne Rühren oder Scheren;

2) Pumpen der geschmolzenen Heißschmelzklebstoffzusammensetzung aus Schritt 1) über eine Zahnrad- oder eine Kolbenpumpe durch einen erhitzten Schlauch; und

3) Auftragen der Heißschmelzklebstoffzusammensetzung über eine Düse, eine Walze oder einen Sprühkopf auf das Substrat.

**14.** Verwendung der Heißschmelzklebstoffzusammensetzung nach einem der Ansprüche 1 bis 12 beim Buchbinden, Verkleben von Holz, bei Flachkaschierung, flexiblem Verpacken, Profilumhüllung, Kantenverleimung, Textilkaschierung, beim Niederdruckgießen und bei Schuhen.

**Revendications**

**1.** Composition adhésive thermofusible comprenant un copolymère de polyuréthane thermoplastique, dans laquelle le copolymère de polyuréthane thermoplastique comprend un produit de réaction d'au moins un polyester polyol obtenu par condensation d'un ou plusieurs alcools polyhydriques avec 2 à 30 atomes de carbone avec un ou plusieurs acides polycarboxyliques ayant 2 à 30 atomes de carbone ; et

facultativement un allongeur de chaîne ; et
au moins un polyisocyanate choisi parmi le 4,4'-diphénylméthanediisocyanate, le 2,2'-diphénylméthane diisocyanate, le diphénylméthane 2,4'-diisocyanate, le 1,3-phénylènediisocyanate, le 1,4-phénylènediisocyanate, le naphtalène-1,5-diisocyanate, le diisocyanate de toluène, le diisocyanate de tétraméthyl xylylène, le diisocyanate de di- et tétraalkyle, le diisocyanate de 4,4'-dibenzyle, le diisocyanate de dodécane, le diisocyanate d'acide gras dimère, le 1,6-diisocyanato-2,2,4- trimethylhexane, le butane-1,4-diisocyanate, l'hexane-1,6-diisocyanate, le tétraméthoxybutane-1,4-diisocyanate, le dicyclohexylméthanediisocyanate, le 1,12-diisocyanato-dodécane, le 4,4-dicyclohexylméthanediisocyanate, le 1,3-cyclohexane ou le 1,4-cyclohexène diisocyanate, le 1-méthyl-2,4-diisocyanato-cyclohexane, le 1-isocyanatométhyl-3-isocyanato-1,5,5-triméthylcyclohexane, le MDI hydrogéné ou partiellement hydrogéné, le xylylènediisocyanate, le tétraméthyl-xylylènediisocyanate, le di- et tétraalkylènediphénylméthane-diisocyanate, et des combinaisons de ceux-ci ;
dans laquelle le rapport molaire des groupes NCO du polyisocyanate aux groupes OH du polyester polyol est inférieur à 0,95:1 ;
dans laquelle la viscosité du copolymère de polyuréthane thermoplastique est de 1 000 à 100 000 mPas à 160 °C ;
dans laquelle le copolymère de polyuréthane thermoplastique est thermiquement stable ; et
dans laquelle la stabilité thermique est définie comme un changement de viscosité inférieur à $\pm$ 10 % par rapport à la viscosité initiale du copolymère de polyuréthane thermoplastique après 6 heures à 160 °C, ledit polyester polyol comprenant

a) au moins un polyester polyol semi-cristallin ayant un point de fusion ($T_m$) de 40 à 150 °C ; et
b) au moins un polyester polyol non cristallin, et où le point de fusion ($T_m$) et la viscosité sont mesurés comme décrit dans la section donnée à titre d'exemple de la description.

**2.** Composition adhésive thermofusible selon la revendication 1, dans laquelle ledit polyester polyol non cristallin b) comprend

c) un polyester polyol non cristallin ayant un poids moléculaire moyen en nombre ($M_n$) inférieur à 750 g/mol ; et
d) un polyester polyol non cristallin ayant un poids moléculaire moyen en nombre ($M_n$) d'au moins 750 g/mol.

**3.** Composition adhésive thermofusible selon la revendication 1 ou 2, dans laquelle ledit polyester polyol comprend un orthophtalate.

**4.** Composition adhésive thermofusible selon l'une quelconque des revendications 1 à 3, dans laquelle le copolymère de polyuréthane thermoplastique a un poids moléculaire moyen en nombre ($M_n$) de 5 000 à 40 000 g/mol.

**5.** Composition adhésive thermofusible selon l'une quelconque des revendications 1 à 4, dans laquelle la composition contient le composé a) de 5 à 50 % en poids, sur la base du poids total du copolymère de polyuréthane thermoplastique.

**6.** Composition adhésive thermofusible selon l'une quelconque des revendications 2 à 5, dans laquelle la composition contient le composé c) de 5 à 50 % en poids, sur la base du poids total du copolymère de polyuréthane thermoplastique.

**7.** Composition adhésive thermofusible selon l'une quelconque des revendications 2 à 6, dans laquelle la composition contient un composé d) de 10 à 60 % en poids, sur la base du poids total du copolymère de polyuréthane thermoplastique.

**8.** Composition adhésive thermofusible selon l'une quelconque des revendications 2 à 4, dans laquelle le copolymère de polyuréthane thermoplastique comprend

    10 à 30 % en poids du composé a) ;
    10 à 40 % en poids du composé c) ;
    10 à 40 % en poids du composé d) ; et
    10 à 25 % en poids dudit polyisocyanate, sur la base du poids total du copolymère thermoplastique.

**9.** Composition adhésive thermofusible selon l'une quelconque des revendications 1 à 8, dans laquelle la composition adhésive thermofusible comprend 50 à 99,9 % en poids du copolymère de polyuréthane thermoplastique, sur la base du poids total de la composition.

**10.** Composition adhésive thermofusible selon l'une quelconque des revendications 1 à 9, dans laquelle la composition adhésive thermofusible comprend 0,1 à 50 % en poids d'additifs, sur la base du poids total de la composition.

**11.** Composition adhésive thermofusible selon l'une quelconque des revendications 1 à 10, dans laquelle la composition adhésive thermofusible comprend 0,1 à 50 % en poids d'au moins un composé choisi parmi les agents collant, les charges, les plastifiants et autres polymères thermoplastiques, qui sont différents du copolymère de polyuréthane thermoplastique, ou une combinaison de ceux-ci.

**12.** Composition adhésive thermofusible selon l'une quelconque des revendications 1 à 11, dans laquelle la composition adhésive thermofusible comprend 0,1 à 10 % en poids d'au moins un composé choisi parmi les stabilisants et les promoteurs d'adhérence ou une combinaison de ceux-ci, sur la base du poids total de la composition.

**13.** Procédé d'application d'une composition adhésive thermofusible selon l'une quelconque des revendications 1 à 12 sur un substrat, comprenant les étapes consistant à

    1) faire fondre la composition adhésive thermofusible dans un récipient chauffé sans agitation ni cisaillement ;
    2) pomper la composition adhésive thermofusible fondue de l'étape 1) par l'intermédiaire d'une pompe à engrenage ou à piston à travers un tuyau chauffé ; et
    3) appliquer la composition adhésive thermofusible sur le substrat par l'intermédiaire d'une buse, d'un rouleau ou d'une tête de pulvérisation.

**14.** Utilisation de la composition adhésive thermofusible selon l'une quelconque des revendications 1 à 12 dans la reliure, le collage du bois, le laminage à plat, l'emballage flexible, l'enrobage de profilés, le placage de chant, le laminage textile, le moulage à basse pression et les chaussures.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3538055 A
- US 20110245449 A
- US 2002120088 A

**Non-patent literature cited in the description**

- The Polyurethanes Handbook. John Wiley and Sons, 2002, 448
- The Polyurethanes Handbook. John Wiley and Sons, 2002